# EUROPEAN PATENT SPECIFICATION

(11) **EP 2 394 891 B1**
(45) Date of publication and mention of the grant of the patent: **11.11.2015**
(21) Application number: 11167011.3
(22) Date of filing: 23.05.2011
(51) Int. Cl.: B62J 6/04, B60Q 1/26, F21S 8/10, F21V 9/08, F21V 17/00

(54) **Tail lamp unit for motorcycle**
Schweiflampeneinheit für ein Motorrad
Unité de lampe arrière pour motocyclette

(30) Priority: 11.06.2010 JP 2010134331; 29.09.2010 JP 2010218476
(43) Date of publication of application: 14.12.2011
(73) Proprietor: Yamaha Hatsudoki Kabushiki Kaisha, Shizuoka-ken Shizuoka 438-8501 (JP)
(72) Inventor: Arakawa, Hiroshi, 10540 Samutprakarn (TH)
(74) Representative: Grünecker Patent- und Rechtsanwälte PartG mbB

(56) References cited:
- EP-A1- 1 785 341
- DE-A1- 3 922 830
- DE-U1- 29 704 776
- JP-A- S6 085 037
- US-A1- 2007 025 113

## Description

### BACKGROUND OF THE INVENTION

The present invention relates to a tail lamp unit for a motorcycle.

A tail lamp unit according to the preamble of claim 1 is known from EP 1 785 341 A1.

The well-known tail lamp units for motorcycles include a base, a tail lamp bulb and two winker bulbs as described in the specification of Japan Patent No. 3592707. The base includes a first reflector section and two second reflector sections. The second reflector sections are disposed on the right and left sides of the first reflection section, respectively. The tail lamp bulb is faced to the first reflector section. The winker bulbs are faced to the second reflector sections on a one-to-one basis.

In the aforementioned tail lamp units, the first reflector section, faced to the tail lamp bulb, has right and left lateral surfaces slanted with respect to the longitudinal (back-and-forth) direction of the vehicle. Specifically, each of the right and left lateral surfaces of the first reflector section is slanted for gradually increasing a distance thereto from a transverse (right-and-left) center line of the first reflector section towards the rear end of each lateral surface. The transverse center line of the first reflector section is herein extended in the longitudinal direction of the vehicle while passing through the tail lamp bulb. Similarly, each of the second reflector sections, faced to a corresponding one of the winker bulbs, has right and left lateral surfaces slanted with respect to the longitudinal direction of the vehicle. Specifically, each of the right and left lateral surfaces of each second reflector section is slanted for gradually increasing a distance thereto from a transverse center line of each second reflector section towards the rear end of each lateral surface. The transverse center line of each second reflector section is herein extended along the longitudinal direction of the vehicle while passing through a corresponding one of the winker bulbs. The aforementioned shapes are demanded due to manufacturing of the base including the reflector sections.

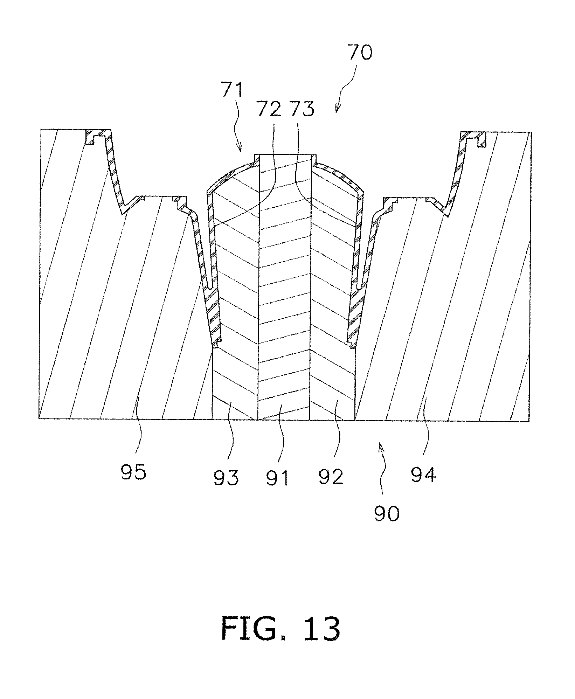

In manufacturing the base using a mold, the base is molded with a resin poured into the mold. It will be herein difficult to pull the mold out of the first and second reflector sections if the shapes of the first and second reflector sections are different from the aforementioned shapes. The drawback can be resolved by dividing the mold into pieces. In a base 70 illustrated in FIG. 13, for instance, the distance between lateral surfaces 72 and 73 of a first reflector section 71 is gradually reduced to the rearward (i.e., downward in FIG. 13). When a mold 90 is herein an integral member, it will be difficult to pull the mold 90 out of the first reflector section 71. Therefore, the mold 90 is required to be divided into pieces such as first to fifth molds 91 to 95, as illustrated in FIG. 13. In the divided structure, the first mold 91 is firstly pulled out of the first reflector section 71. Subsequently, the second and third molds 92 and 93 can be easily pulled out of the first reflector section 71. In this case, however, a herein used manufacturing device will be complex and manufacturing cost will be increased. Therefore, the well-known tail lamp unit normally has the aforementioned structure. Simply put, each of the first reflector section and the second reflector sections has a shape that the distance between each lateral surface thereof and the transverse center line is increased to the rearward.

Meanwhile, enlargement in the longitudinal length of the tail lamp unit has been recently demanded for enhancing appearance of the motorcycles. However, the following drawbacks will be produced when the longitudinal length of the aforementioned well-known tail lamp unit is enlarged.

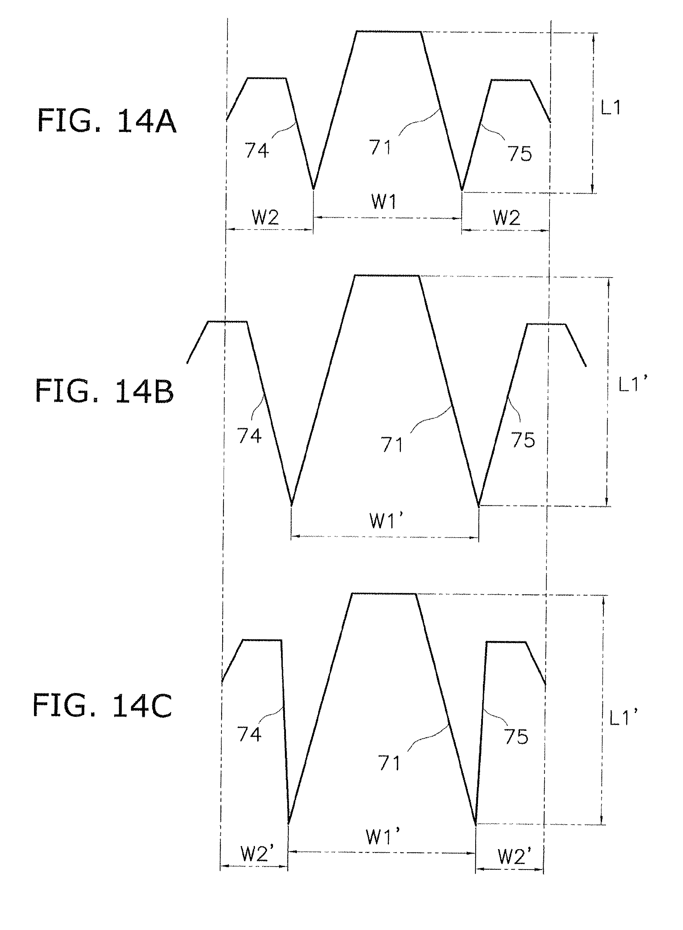

The both lateral surfaces of the first reflector section are slanted for increasing the distance therebetween to the rearward. Therefore, transverse dimension of the first reflector section will be increased in proportion to increase in the longitudinal dimension of the first reflector section. As illustrated in FIGS. 14 (a) and 14 (b), for instance, the transverse dimension of the first reflector 71 is increased from W1 to W1' when the longitudinal dimension of the first reflector 71 is increased from L1 to L1'. It should be noted that FIG. 14 schematically illustrates the reflector sections of the tail lamp unit. Further, the transverse dimension of each second reflector section will be reduced when the transverse dimension of the first reflector section is increased but the transverse dimension of the entire tail lamp unit is maintained. As illustrated in FIG. 14 (c), for instance, the transverse dimension of each of the second reflector sections 74 and 75 will be reduced from W2 to W2' when the transverse dimension of the first reflector section 71 is increased from W1 to W1' but the transverse dimension of the entire tail lamp unit is maintained. Therefore, it is required to increase the transverse dimension of the entire tail lamp unit for maintaining the transverse dimension of each second reflector section. However, the transverse dimension of the entire tail lamp unit is restricted by the transverse dimension of a vehicle body that the tail lamp unit is attached. Therefore, it is further required to increase the transverse dimension of the vehicle body for increasing the transverse dimension of the entire tail lamp unit. However, this is not an easy task.

As described above, it is difficult to achieve all of the following objects for the well-known tail lamp unit: easiness of manufacturing; enlargement of the tail lamp unit in the longitudinal direction; and inhibition of enlargement of the tail lamp unit in the transverse direction. In view of the above, it is an object of the present invention to produce a tail lamp unit for achieving easiness of manufacturing, enlargement of the tail lamp unit in the longitudinal direction, and inhibition of enlargement of the tail lamp unit in the transverse direction.

### SUMMARY OF THE INVENTION

The object of the present invention is achieved by a tail-lamp unit for a motorcycle according to claim 1. A tail lamp unit for a motorcycle according to a first aspect of the present invention includes a reflection member, **a partition member made of an opaque resin and including** a first partition section and a second partition section, **and a hollow space positioned between the first partition section and the second partition section, the hollow space longitudinally penetrating the partition member. The partition member is produced as an individual component separated from the reflection member**. The reflection member includes a first reflection section, a second reflection section and a third reflection section. The first partition section is disposed rearwards of the reflection member **in a front-rear direction of the tail lamp unit in its mounted position on a motorcycle**. The first partition section separates a first container space and a third container space. The first container space is a space for disposing a right flasher bulb therein. The third container space is a space for disposing a tail lamp bulb therein. The second partition section is disposed rearwards of the reflection member **in a front-rear direction of the tail lamp unit in its mounted position on a motorcycle**. The second partition section separates the third container space and a second container space. The second container space is a space for disposing a left flasher bulb therein. Further, the first partition section and the second partition section are disposed either in parallel to each other or at an interval gradually backwardly reduced **in a front-rear direction of the tail lamp unit in its mounted position on a motorcycle**. The tail lamp unit for a motorcycle further includes a tail lamp bulb, a right flasher bulb and a left flasher bulb. The right flasher bulb is disposed rightward of the tail lamp bulb. The left flasher bulb is disposed leftward of the tail lamp bulb. The first reflection section is configured to backwardly reflect a light emitted from the right flasher bulb. The second reflection section is configured to backwardly reflect a light emitted from the left flasher bulb. The third reflection section is configured to backwardly reflect a light emitted from the tail lamp bulb.

A tail lamp unit for a motorcycle according to a second aspect of the present invention relates to the tail lamp unit for a motorcycle according to the first aspect of the present invention. In the tail lamp unit, the reflection member includes a first groove section and a second groove section. The first groove section is disposed between the first reflection section and the third reflection section. A front end of the first partition section is disposed in the first groove section. The second groove section is disposed between the second reflection section and the third reflection section. A front end of the second partition section is disposed in the second groove section.

A tail lamp unit for a motorcycle according to a third aspect of the present invention relates to the tail lamp unit for a motorcycle according to the first aspect of the present invention. The tail lamp unit further includes an outer lens member. The outer lens member is disposed for covering the right flasher bulb, the left flasher bulb and the tail lamp bulb from back sides thereof. The outer lens member covers the first partition section and the second partition section. The outer lens member is produced as a single integrally formed component.

A tail lamp unit for a motorcycle according to a fourth aspect of the present invention relates to the tail lamp unit for a motorcycle according to the third aspect of the present invention. The inner lens member covers a rear opening of the partition member communicating with the hollow space. The inner lens has a color different from a color of the outer lens member.

A tail lamp unit for a motorcycle according to a fifth aspect of the present invention relates to the tail lamp unit for a motorcycle according to the fourth aspect of the present invention. In the tail lamp unit, the partition member further includes a grill section. The grill section is opposed to the inner lens member. The grill section includes a plurality of through holes.

A tail lamp unit for a motorcycle according to a sixth aspect of the present invention relates to the tail lamp unit for a motorcycle according to the first aspect of the present invention. In the tail lamp unit, the right flasher bulb, the left flasher bulb and the tail lamp bulb are transversely aligned.

A motorcycle according to a seventh aspect of the present invention includes the tail lamp unit for a motorcycle according to the first aspect of the present invention and a vehicle body for attaching the tail lamp unit for a motorcycle thereto.

A motorcycle according to an eighth aspect of the present invention relates to the motorcycle according to the seventh aspect of the present invention. In the motorcycle, the tail lamp unit for a motorcycle is attached to the vehicle body through an elastic member.

### <Advantageous Effects of Invention>

According to the tail lamp unit for a motorcycle of the first aspect of the present invention, the first and second partition sections are produced as individual components separated from the reflection member. Therefore, it is only required to increase the longitudinal dimensions of the first and second partition sections when the longitudinal dimension of the tail lamp unit is increased. Consequently, it is possible to inhibit increase in the transverse dimension of the lateral surfaces of the first to third reflection sections even when the lateral surfaces of each of the first to third reflection sections are slanted for gradually increasing the interval therebetween to the rearward. Further, the interval between the first and second partition sections is gradually reduced to the rearward. Alternatively, the first and second partition sections are disposed in parallel to each other. Therefore, the transverse interval between the first and second partition sections is prevented from being increased even when the longitudinal dimension of the tail lamp unit is increased. Consequently, it is possible to inhibit enlargement of the tail lamp unit in the transverse direction. Yet further, the first and second partition sections are produced as individual components separated from the reflection member. Therefore, each component can be easily manufactured by resin molding using a mold. As described above, it is possible to simultaneously achieve easiness of manufacturing, enlargement of the tail lamp unit in the longitudinal direction, and inhibition of enlargement of the tail lamp unit in the transverse direction.

According to the tail lamp unit for a motorcycle of the second aspect of the present invention, the front end of the first partition section is disposed in the first groove section. Therefore, it is possible to inhibit occurrence of light leakage from the first container space to the third container space and vice versa. Further, the front end of the second partition section is disposed in the second groove section. Therefore, it is possible to inhibit occurrence of light leakage from the second container space to the third container space and vice versa

According to the tail lamp unit for a motorcycle of the third aspect of the present invention, the right flasher bulb, the left flasher bulb and the tail lamp bulb are covered with the outer lens member produced as a single component. Therefore, it is herein possible to further enhance a waterproof property and an assemblage property compared to the structure that separate individual outer lens members are attached to the right flasher bulb, the left flasher bulb and the tail lamp bulb respectively.

According to the tail lamp unit for a motorcycle of the fourth aspect of the present invention, the rear opening of the partition member is covered with the inner lens member having a color different from that of the outer lens member. Therefore, the light emitted from the tail lamp bulb disposed in the inside of the partition member is irradiated rearwards through the inner lens member. Therefore, the light emitted from the tail lamp bulb can be inhibited from leaking rearwards without changing the color thereof.

According to the tail lamp unit for a motorcycle of the fifth aspect of the present invention, the grill section is opposed to the inner lens member. Therefore, the light emitted from the tail lamp bulb can be distinctive.

According to the tail lamp unit for a motorcycle of the sixth aspect of the present invention, the right flasher bulb, the left flasher bulb and the tail lamp bulb are transversely aligned. In other words, the right flasher bulb, the left flasher bulb and the tail lamp bulb are disposed without being displaced from each other in both the vertical (up-and-down) direction and the longitudinal direction. Therefore, the first and second partition sections can effectively inhibit leakage of the light emitted from each of the bulbs from the container space of each bulb to the adjacent container space/spaces. Further, the tail lamp unit can be herein further compactly produced compared to the structure that the right flasher bulb, the left flasher bulb and the tail lamp bulb are displaced in either the vertical direction or the longitudinal direction.

According to the motorcycle of the seventh aspect of the present invention, the aforementioned tail lamp unit for a motorcycle is attached to the vehicle body.

According to the motorcycle of the eighth aspect of the present invention, the tail lamp unit for a motorcycle is attached to the vehicle body through the elastic member. Therefore, it is possible to enhance the vibration isolation property of the tail lamp unit. Further, it is possible to enhance accuracy in alignment between the vehicle body and the tail lamp unit.

### BRIEF DESCRIPTION OF THE DRAWINGS

Referring now to the attached drawings which form a part of this original disclosure:
FIG. 1 is a left side view of a motorcycle according to an exemplary embodiment of the present invention;
FIG. 2 is an exploded perspective view of a tail lamp unit for the motorcycle according to the exemplary embodiment of the present invention;
FIG. 3 is a side view of the tail lamp unit for the motorcycle;
FIG. 4 is a top view of the tail lamp unit for the motorcycle;
FIG. 5 is a rear view of the tail lamp unit for the motorcycle;
FIG. 6 is a cross-sectional view of the tail lamp unit for the motorcycle sectioned along a line A-A in FIG. 5;
FIG. 7 is a partial cross-sectional view of the motorcycle sectioned along a line B-B in FIG. 1;
FIG. 8 is a partial cross-sectional view of the motorcycle sectioned along a line C-C in FIG. 1;
FIG. 9 is a partial cross-sectional view of the motorcycle sectioned along a line D-D in FIG. 1;
FIG. 10 is a schematic view for comparing the tail lamp unit for the motorcycle of the exemplary embodiment and a tail lamp unit for a motorcycle of a well-known type;
FIG. 11 is a schematic view for comparing the tail lamp unit for the motorcycle of another exemplary embodiment and the tail lamp unit for the motorcycle of the well-known type;
FIG. 12 is a cross-sectional view of the tail lamp unit for the motorcycle of another exemplary embodiment;
FIG. 13 is a diagram illustrating a method of manufacturing the tail lamp unit for the motorcycle of the well-known type; and
FIG. 14 is a schematic view of the shapes of the tail lamp unit for the motorcycle of the well-known type.

### DETAILED DESCRIPTION OF THE EMBODIMENTS

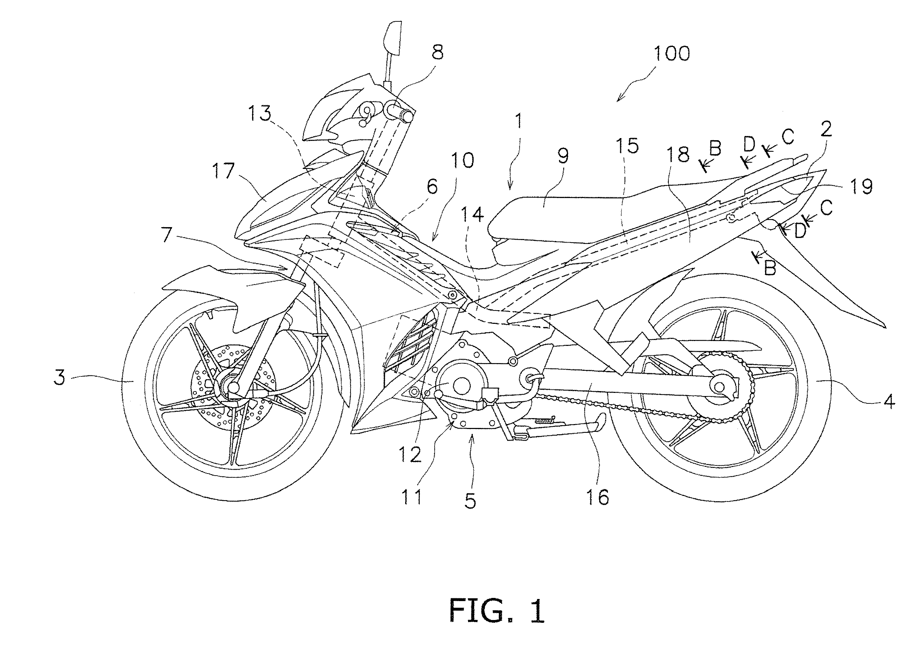

An exemplary embodiment of the present invention will be hereinafter explained with reference to figures. FIG. 1 is a side view of a motorcycle 100 according to an exemplary embodiment of the present invention. The motorcycle 100 is so-called a moped. In the following explanation, directional terms of "front", "rear", "right" and "left" and their related terms refer to directions seen from a rider seated on a seat 9 of the motorcycle 100 unless otherwise specified. Further, the term "lateral" and its related terms refer to a direction separating away from a vehicle body center in the transverse direction of the vehicle. As illustrated in FIG. 1, the motorcycle 100 includes a vehicle body 1 and a tail lamp unit 2 for a motorcycle.

The vehicle body 1 includes a front wheel 3, a rear wheel 4, a drive unit 5, a vehicle body frame 6, a front fork 7, a handle 8, the seat 9, a vehicle body cover 10 and the like. The drive unit 5 is disposed between the front wheel 3 and the rear wheel 4 in the longitudinal (back-and-forth) direction of the vehicle. The drive unit 5 is supported by the vehicle body frame 6. The drive unit 5 includes an engine 11 as a drive source and a transmission 12. The transmission 12 is configured to transmit the drive force from the engine 11 to the rear wheel 4 through a chain.

The vehicle body frame 6 includes a head pipe 13, a main frame 14 and a rear frame 15. The head pipe 13 supports the front fork 7 for allowing it to rotate. The main frame 14 is connected to the head pipe 13 while being extended from the head pipe 13 obliquely rearwards and downwards. The main frame 14 is disposed over the drive unit 5. A rear arm 16 is pivotably attached to the rear portion of the main frame 14 through a bracket (not illustrated in the figure). The rear arm 16 supports the rear wheel 4 for allowing it to rotate. The rear frame 15 is connected to the main frame 14 while being extended therefrom obliquely rearwards and upwards. The rear frame 15 is disposed over the rear wheel 4. Further, the seat 9 is disposed over the rear frame 15 while being supported by the rear frame 15.

The front fork 7 supports the front wheel 3 for allowing it to rotate. The handle 8 is coupled to the top of the front fork 7. The seat 9 is disposed over the rear frame 15.

The vehicle body cover 10 is a resin member covering the vehicle body frame 6. The vehicle body cover 10 includes a front cover section 17 and a rear cover section 18. The front cover section 17 covers a portion of the vehicle body frame 6 disposed forwards of the seat 9. The front surface of the front cover section 17 covers the front side of the head pipe 13. Further, the lateral surfaces of the front cover section 17 cover the lateral sides of the front fork 7 and at least a portion of the lateral sides of the drive unit 5. The rear cover section 18 is disposed under the seat 9. The rear cover section 18 covers the lateral sides of the rear frame 15. Simultaneously, the rear cover section 18 covers the top side of a rear portion of the rear frame 15. The rear cover section 18 includes an opening 19 on the rear portion thereof. A portion of the tail lamp unit 2 is inserted into the opening 19.

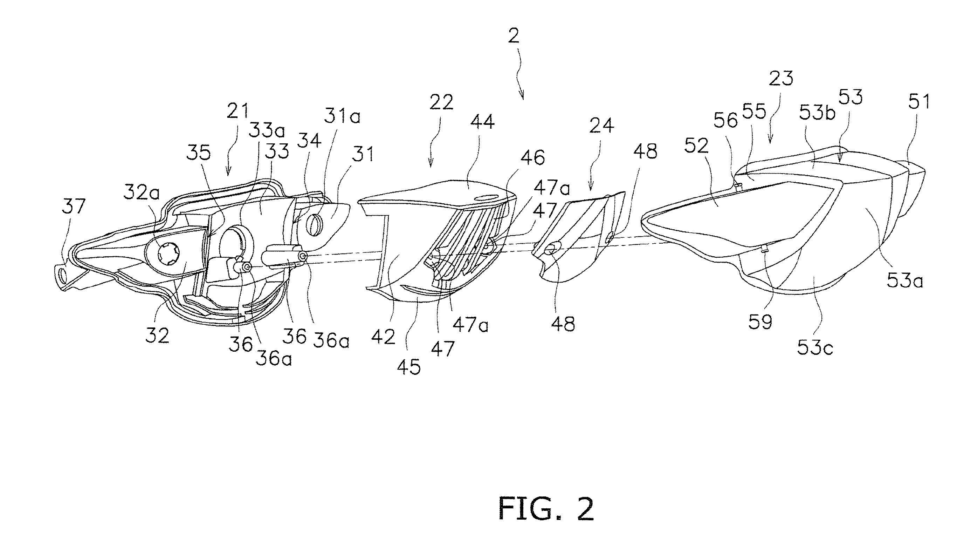

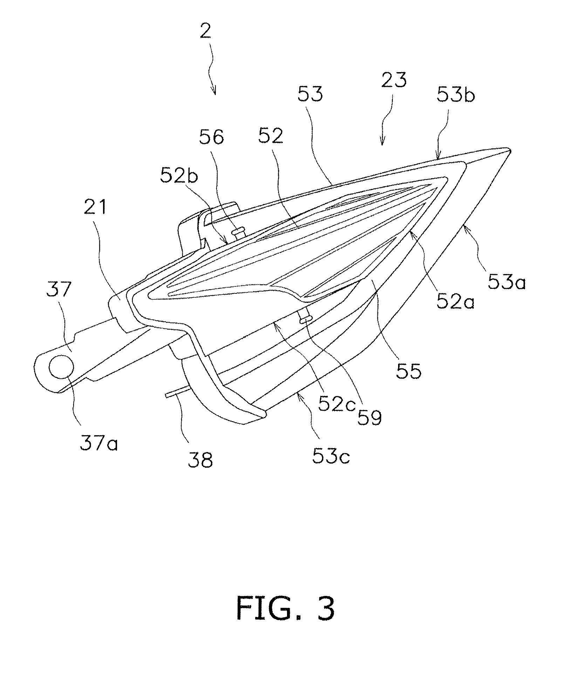

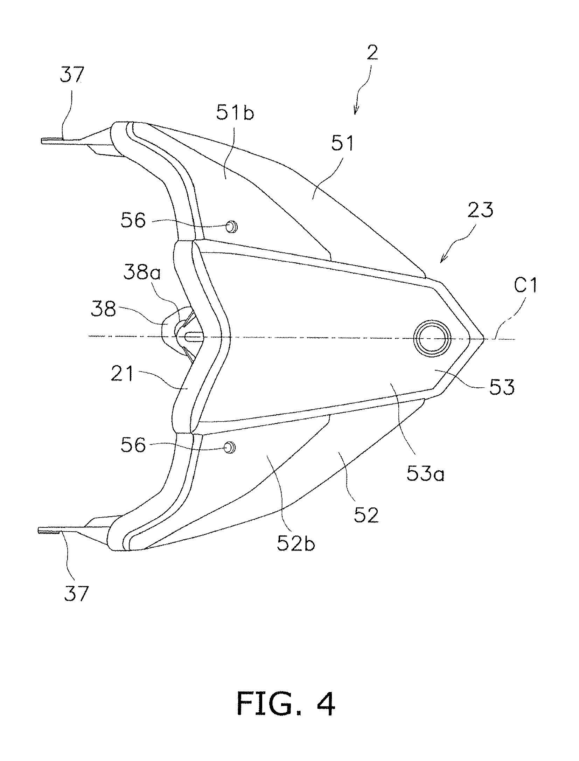

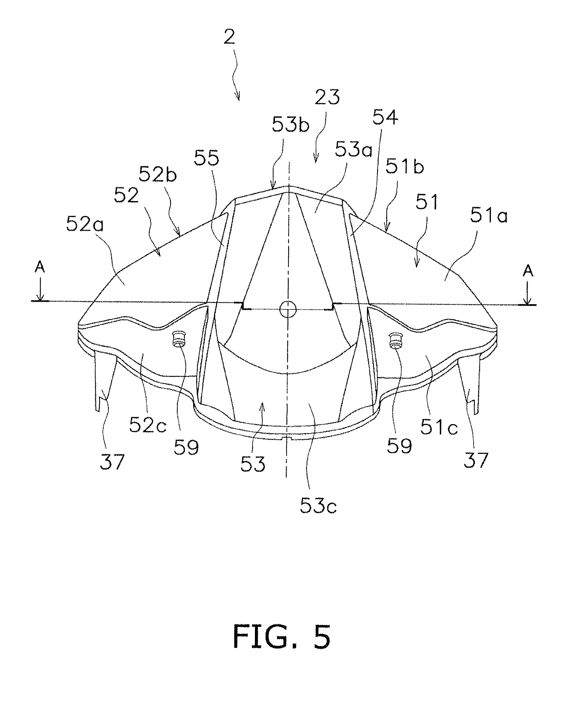

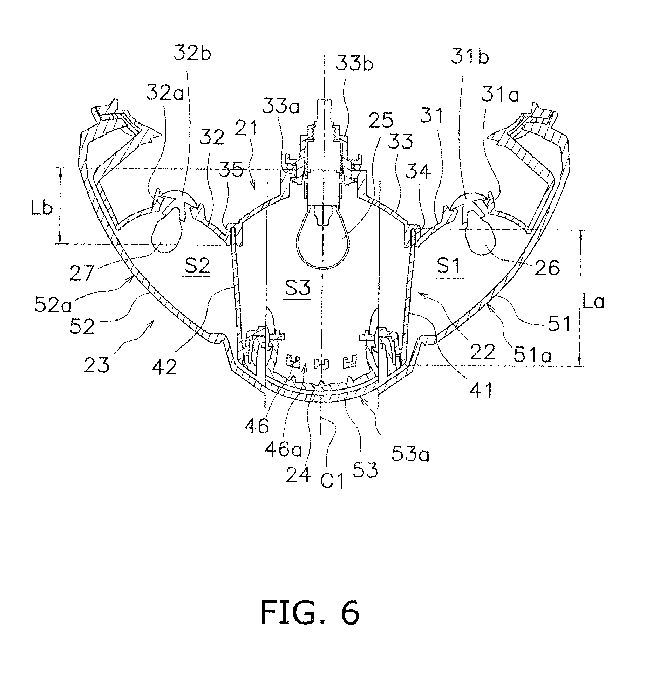

The tail lamp unit 2 is attached to the vehicle body 1. Specifically, the tail lamp unit 2 is attached to the aforementioned rear portion of the rear cover section 18. The structure of the tail lamp unit 2 will be hereinafter explained with reference to FIGS. 2 to 6. Specifically, FIG. 2 is an exploded perspective view of the tail lamp unit 2. FIG. 3 is a side view of the tail lamp unit 2. FIG. 4 is a top view of the tail lamp unit 2. FIG. 5 is a rear view of the tail lamp unit 2. It should be noted that FIGS. 3 to 5 illustrate a posture of the tail lamp unit 2 attached to the vehicle body 1. FIG. 6 is a cross-sectional view of the tail lamp unit 2 sectioned along a line A-A in FIG. 5. It should be noted that the terms "longitudinal (back-and-forth)", "transverse (right-and-left)", "lateral", "vertical (up-and-down)" and their related terms will hereinafter refer to directions based on the posture of the tail lamp unit 2 attached to the vehicle body 1.

As illustrated in FIG. 2, the tail lamp unit 2 includes a reflection member 21, a partition member 22, an outer lens member 23 and an inner lens member 24. As illustrated in FIG. 6, the tail lamp unit 2 further includes a tail lamp bulb 25, a right flasher bulb 26 and a left flasher bulb 27.

The reflection member 21 is a member for attaching thereto the tail lamp bulb 25, the right flasher bulb 26 and the left flasher bulb 27. The reflection member 21 covers the front sides of the tail lamp bulb 25, the right flasher bulb 26 and the left flasher bulb 27. The reflection member 21 reflects the light emitted from the tail lamp bulb 25, the right flasher bulb 26 and the left flasher bulb 27 to the rearward. The reflection member 21 is a single individual component integrally formed by resin molding. The reflection member 21 includes a first reflection section 31, a second reflection section 32, a third reflection section 33, a first groove section 34, a second groove section 35, a plurality of first inner attachment sections 36, a plurality of first outer attachment sections 37, and a second outer attachment section 38.

The first, second and third reflection sections 31, 32 and 33 are disposed on the rear surface of the reflection member 21. Each of the first, second and third reflection sections 31, 32 and 33 is formed as a mirror surface. The first, second and third reflection sections 31, 32 and 33 are aligned in the transverse direction. The third reflection section 33 is transversely disposed between the first reflection section 31 and the second reflection section 32.

The first reflection section 31 is a section for attaching the right flasher bulb 26 thereto. The first reflection section 31 includes a first attachment hole 31a. As illustrated in FIG. 6, the right flasher bulb 26 is attached to the first attachment hole 31a through a first socket 31b. The first reflection section 31 has a curved surface that is recessed forwards for reflecting the light emitted from the right flasher bulb 26 to the rearward. In other words, the lateral surfaces of the first reflection section 31 are slanted for gradually increasing the distance therebetween to the rearward.

The second reflection section 32 is a section for attaching the left flasher bulb 27 thereto. The second reflection section 32 includes a second attachment hole 32a. The left flasher bulb 27 is attached to the second attachment hole 32a through a second socket 32b. The second reflection section 32 has a curved surface that is recessed forwards for reflecting the light emitted from the left flasher bulb 27 to the rearward. In other words, the lateral surfaces of the second reflection section 32 are slanted for gradually increasing the distance therebetween to the rearward.

The third reflection section 33 is a section for attaching the tail lamp bulb 25 thereto. The third reflection section 33 includes a third attachment hole 33a. The tail lamp bulb 25 is attached to the third attachment hole 33a through a third socket 33b. The third reflection section 33 has a curved surface that is recessed forwards for reflecting the light emitted from the tail lamp bulb 25 to the rearward. In other words, the lateral surfaces of the third reflection section 33 are slanted for gradually increasing the distance therebetween to the rearward.

The first and second groove sections 34 and 35 are grooves forwardly recessed from the rear surface of the reflection member 21. The first and second groove sections 34 and 35 are disposed along the vertical direction. The first groove section 34 is transversely disposed between the first reflection section 31 and the third reflection section 33. As illustrated in FIG. 6, the front end of a first partition section 41 to be described is disposed in the first groove section 34. The first partition section 41 is included in the partition member 22. The second groove section 35 is transversely disposed between the second reflection section 32 and the third reflection section 33. The front end of a second partition section 42 to be described is disposed in the second groove section 35. The second partition section 42 is included in the partition member 22.

As illustrated in FIG. 2, the plural first inner attachment sections 36 are disposed on the third reflection section 33 while being protruded therefrom to the rearward. The first inner attachment sections 36 are aligned in the transverse direction while being transversely separated from each other. Each of the first inner attachment sections 36 includes an aperture 36a in the tip thereof. The right side one of the first inner attachment sections 36 is disposed adjacent to the first groove section 34, whereas the left side one of the first inner attachment sections 36 is disposed adjacent to the second groove section 35.

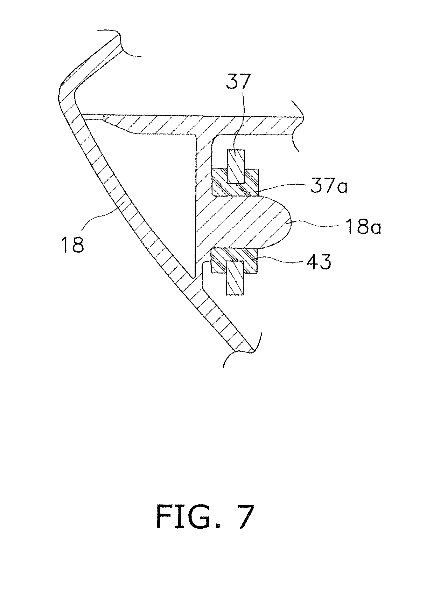

As illustrated in FIG. 4, the plural first outer attachment sections 37 are disposed on the front surface of the reflection member 21 while being protruded therefrom to the forward. The first outer attachment sections 37 are aligned in the transverse direction while being transversely separated from each other. As illustrated in FIG. 3, each of the first outer attachment sections 37 includes an aperture 37a transversely penetrating therethrough. As illustrated in FIG. 7, protrusions 18a are respectively inserted into the apertures 37a. The protrusions 18a are disposed on the inner surface of the aforementioned rear cover section 18. The protrusions 18a are attached to the first outer attachment sections 37 through elastic members 43 made of rubber or the like. Accordingly, the reflection member 21 is fixed to the rear cover section 18 through the elastic members 43. It should be noted that FIG. 7 illustrates a partial cross-sectional view of the motorcycle 100 sectioned along a line B-B in FIG. 1.

As illustrated in FIG. 4, the second outer attachment section 38 is disposed on the front surface of the reflection member 21 while being protruded therefrom to the forward. The second outer attachment section 38 is positioned on roughly the center of the front surface of the reflection member 21 in the transverse direction. The second outer attachment section 38 includes an aperture 38a vertically penetrating therethrough. A protrusion, formed on the vehicle body frame 6 (not illustrated in the figures), is inserted into the aperture 38a. Specifically, the protrusion of the vehicle body frame 6 is attached to the second outer attachment section 38 through an elastic member (not illustrated in the figures). As illustrated in FIG. 3, the second outer attachment section 38 is positioned lower than the first outer attachment sections 37.

As illustrated in FIG. 2, the partition member 22 is an individual member produced separately from the reflection member 21. The partition member 22 is disposed rearwards of the reflection member 21. The partition member 22 is made of a material with opacity. In other words, the partition member 22 is made of an opaque resin. The front and rear surfaces of the partition member 22 are opened. The partition member 22 has a roughly box-like shape and includes a hollow space longitudinally penetrating therethrough. The opening of the front surface of the partition member 22 will be hereinafter referred to as "a front opening", whereas the opening of the rear surface of the partition member 22 will be hereinafter referred to as "a rear opening". The partition member 22 includes the first partition section 41 (see FIG. 6), the second partition section 42, a top surface section 44, a bottom surface section 45, a grill section 46 and a plurality of second inner attachment sections 47.

The first and second partition sections 41 and 42 are disposed at a predetermined interval in the transverse direction. The aforementioned hollow space within the partition member 22 is transversely positioned between the first and second partition sections 41 and 42. Each of the first and second partition sections 41 and 42 has a flat plate-like shape extended in both longitudinal and vertical directions. The first and second partition sections 41 and 42 form the lateral surfaces of the partition member 22. As illustrated in FIG. 6, the first partition section 41 is slanted while being gradually positioned closer to the transverse center (see a dashed dotted line C1) to the rearward. Similarly, the second partition section 42 is slanted while being gradually positioned closer to the transverse center (see the dashed dotted line C1) to the rearward. In other words, the transverse interval between the first and second partition sections 41 and 42 is gradually reduced to the rearward. Further, the first partition section 41 separates a first container space S1 and a third container space S3. The first container space S1 is a space for disposing the right flasher bulb 26 therein, whereas the third container space S3 is a space for disposing the tail lamp bulb 25 therein. The first partition section 41 thus spatially separates the right flasher bulb 26 and the tail lamp bulb 25. Each of the first and second partition sections 41 and 42 has a longitudinal length La greater than a longitudinal length Lb of the third reflection section 33. Further, the tip of the first partition section 41 makes contact with the reflection member 21. Specifically, the tip of the first partition section 41 is disposed in the first groove section 34. On the other hand, the second partition section 42 separates a second container space S2 and the third container space S3. The second container space S2 is a space for disposing the left flasher bulb 27 therein. The second partition section 42 spatially separates the left flasher bulb 27 and the tail lamp bulb 25. Further, the tip of the second partition section 42 makes contact with the reflection member 21. Specifically, the tip of the second partition section 42 is disposed in the second groove section 35 as described above.

The top surface section 44 forms the top surface of the partition member 22. The top surface section 44 couples the top edge of the first partition section 41 and the top edge of the second partition section 42. Accordingly, the top surface section 44 covers the top side of the hollow space included in the inside of the partition member 22. The bottom surface section 45 forms the bottom surface of the partition member 22. The bottom surface section 45 couples the bottom edge of the first partition section 41 and the bottom edge of the second partition section 42. Accordingly, the bottom surface section 45 covers the bottom side of the hollow space included in the inside of the partition member 22.

The grill section 46 is disposed within the rear opening of the partition member 22. As illustrated in FIG. 6, the grill section 46 is opposed to the inner lens member 24 to be described. The grill section 46 includes a plurality of through holes 46a. Specifically, the grill section 46 has a lattice-like shape extended in the vertical direction. It should be noted that the reference numeral "46a" is assigned to only a portion of the through holes 46a in FIG. 6.

As illustrated in FIG. 2, the plural second inner attachment sections 47 are disposed to be matched with the aforementioned first inner attachment sections 36 on a one-to-one basis. The second inner attachment sections 47 are disposed within the rear opening of the partition member 22. Each of the second inner attachment sections 47 has a flat shape and the front surface thereof makes contact with the tip of a corresponding one of the first inner attachment sections 36. Each of the second inner attachment sections 47 includes an aperture 47a disposed to be matched with the aperture 36a of a corresponding one of the first inner attachment sections 36.

The inner lens member 24 covers the rear opening of the partition member 22. The inner lens member 24 is attached to the partition member 22 for sealing the rear opening of the partition member 22. The inner lens member 24 is a thin plate-like member. The inner lens member 24 has a curved shape bulged rearwards. The inner lens member 24 is made of a colored resin with transparency. The color of the inner lens member 24 is different from that of the outer lens member 23. The inner lens member 24 includes a plurality of third inner attachment sections 48. The third inner attachment sections 48 are aligned in the transverse direction while being transversely separated from each other. The third inner attachment sections 48 are disposed to be matched with the aforementioned second inner attachment sections 47 on a one-to-one basis. The third inner attachment sections 48 are recessed forwards from the rear surface of the inner lens member 24. Each of the third inner attachment sections 48 includes an aperture (not illustrated in the figures) disposed to be matched with the aperture 47a of a corresponding one of the second inner attachment sections 47. The reflection member 21, the partition member 22 and the inner lens member 24 are fixed to each other by inserting screws into the aperture 36a of the first inner attachment sections 36, the apertures 47a of the second inner attachment sections 47, and the apertures of the third inner attachment sections 48.

The front surface of the outer lens member 23 is opened. The outer lens member 23 is attached to the reflection member 21 for covering the rear surface of the reflection member 21. The outer lens member 23 is thereby disposed for covering the right flasher bulb 26, the left flasher bulb 27 and the tail lamp bulb 25 from the rear side. The outer lens member 23 covers the partition member 22. In other words, the outer lens member 23 covers the first and second partition sections 41 and 42. Further, the outer lens member 23 covers the inner lens member 24. The outer lens member 23 is made of a resin with transparency. Specifically, the outer lens member 23 is made of a colored resin with transparency. The outer lens member 23 is a single individual component integrally produced. Further, the outer lens member 23 has a tapered shape for gradually reducing the vertical dimension thereof to the rearward, as illustrated in the side view of FIG. 3. Yet further, the outer lens member 23 has a tapered shape for gradually reducing the transverse width thereof to the rearward, as illustrated in the top view of FIG. 4.

The outer lens member 23 includes a first lens section 51, a second lens section 52 and a third lens section 53. The first, second and third lens sections 51, 52 and 53 are aligned in the transverse direction. The first lens section 51 is disposed for covering each of the rear, top and bottom sides of the right flasher bulb 26. As illustrated in FIG. 6, the first lens section 51 encloses the space for containing the right flasher bulb 26 therein (i.e., the first container space S1), together with the first reflection section 31 and the first partition section 41. The second lens section 52 is disposed for covering each of the rear, top and bottom sides of the left flasher bulb 27. The second lens section 52 encloses the space for containing the left flasher bulb 27 therein (i.e., the second container space S2), together with the second reflection section 32 and the second partition section 42.

The third lens section 53 is positioned between the first lens section 51 and the second lens section 52 in the transverse direction. A rear surface 53a of the third lens section 53 is opposed to the inner lens member 24 for covering the rear side of the inner lens member 24. The rear surface 53a of the third lens section 53 is disposed closer to the inner lens member 24. The rear surface 53a of the third lens section 53 is positioned rearwards of a rear surface 51a of the first lens section 51 and a rear surface 52a of the second lens section 52. As illustrated in FIG. 2, a top surface 53b of the third lens section 53 is disposed closer to the top surface section 44 of the partition member 22. A bottom surface 53c of the third lens section 53 is disposed closer to the bottom surface section 45 of the partition member 22. As illustrated in FIG. 5, the top surface 53b of the third lens section 53 is positioned higher than a top surface 51b of the first lens section 51 and a top surface 52b of the second lens section 52. The bottom surface 53c of the third lens section 53 is positioned lower than a bottom surface 51c of the first lens section 51 and a bottom surface 52c of the second lens section 52. Therefore, a first step section 54 is produced between the first lens section 51 and the third lens section 53. Further, a second step section 55 is produced between the second lens section 52 and the third lens section 53. The aforementioned first and second partition sections 41 and 42 are disposed within the third lens section 53 while being extended to reach the rear, upper and bottom surfaces 53a, 53b and 53c of the third lens section 53. The structure sufficiently isolates the first container space S1 for disposing the right flasher bulb 26 therein, the second container space S2 for disposing the left flasher bulb 27 therein, and the space for disposing the tail lamp bulb 25 therein (i.e., the third container space S3).

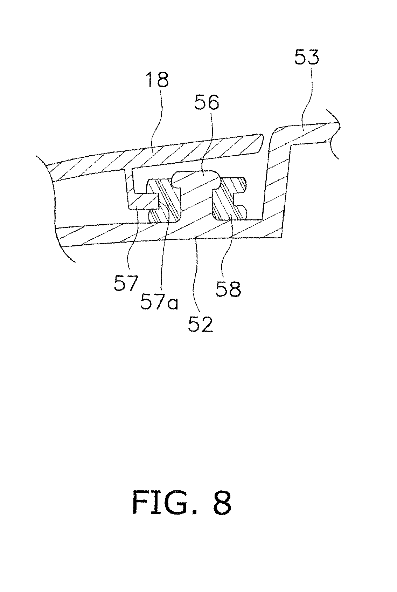

As illustrated in FIGS. 3 and 4, the outer lens member 23 includes a plurality of first attachment protrusions 56 on the top surface thereof. The first attachment protrusions 56 are protruded upwards from the top surface of the outer lens member 23. Specifically, the first lens section 51 includes the first attachment protrusion 56 on the top surface 51b thereof, whereas the second lens section 52 includes the first attachment protrusion 56 on the top surface 52b thereof. As illustrated in FIG. 8, the aforementioned rear cover section 18 includes a plurality of first attachment sections 57 on the inner surface thereof. Each of the first attachment sections 57 includes a notch 57a. Each of the first attachment protrusions 56 is fixed to a corresponding one of the first attachment sections 57 through an elastic member 58 made of rubber or the like. It should be noted that FIG. 8 illustrates a partial cross-sectional view of the motorcycle 100 sectioned along a line C-C in FIG. 1.

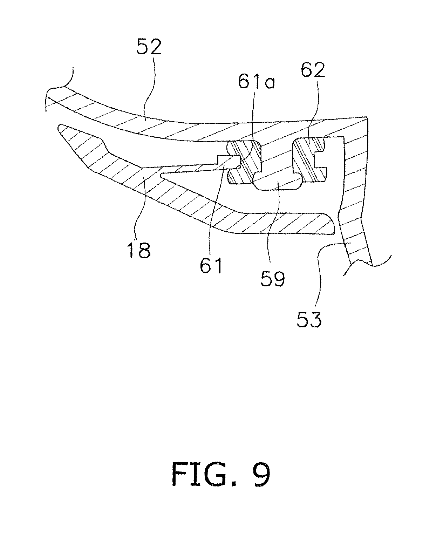

As illustrated in FIGS. 3 and 5, the outer lens member 23 further includes a plurality of second attachment protrusions 59 on the bottom surface thereof. The second attachment protrusions 59 are protruded downwards from the bottom surface of the outer lens member 23. Specifically, the first lens section 51 includes the second attachment protrusion 59 on the bottom surface 51c thereof, whereas the second lens section 52 includes the second attachment protrusion 59 on the bottom surface 52c thereof. As illustrated in FIG. 9, the aforementioned rear cover section 18 includes a plurality of second attachment sections 61 on the inner surface thereof. Each of the second attachment sections 61 includes a notch 61a. Each of the second attachment protrusions 59 is fixed to a corresponding one of the second attachment sections 61 through an elastic member 62 made of rubber or the like. It should be noted that FIG. 9 illustrates a partial cross-sectional view of the motorcycle 100 sectioned along a line D-D in FIG. 1.

As described above, the outer lens member 23 is fixed to the rear cover section 18 through the elastic members 58 and 62. Further, the reflection member 21 is also fixed to the rear cover section 18 through the elastic members 43, as described above. Therefore, the tail lamp unit 2 is attached to the vehicle body 1 through the elastic members 43, 58 and 62.

As illustrated in FIG. 6, the tail lamp bulb 25, the right flasher bulb 26 and the left flasher bulb 27 are transversely aligned in a row. As described above, the tail lamp bulb 25 is attached to the third reflection section 33. The tail lamp bulb 25 is disposed in the third container space S3 enclosed by the third reflection section 33, the partition member 22 and the third lens section 53. The right flasher bulb 26 is disposed on the right side of the tail lamp bulb 25. As described above, the right flasher bulb 26 is attached to the first reflection section 31. The right flasher bulb 26 is disposed in the first container space S1 enclosed by the first reflection section 31, the first partition section 41 and the first lens section 51. The left flasher bulb 27 is disposed on the left side of the tail lamp bulb 25. As described above, the left flasher bulb 27 is attached to the second reflection section 32. The left flasher bulb 27 is disposed in the second container space S2 enclosed by the second reflection section 32, the second partition section 42 and the second lens section 52.

The motorcycle 100 according to the exemplary embodiment of the present invention has the following features.

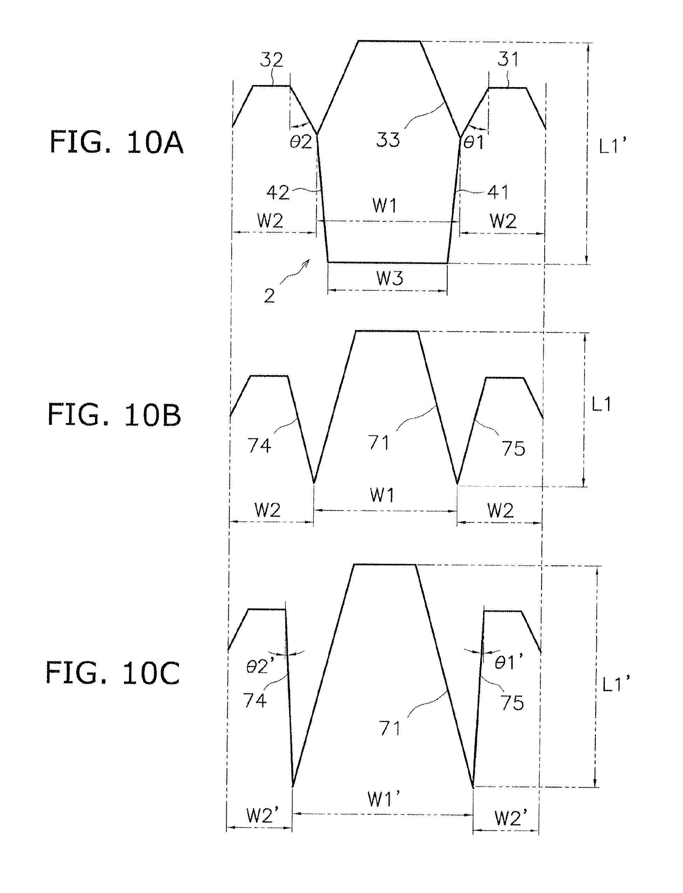

FIG. 10 (a) schematically illustrates the tail lamp unit 2 according to the present exemplary embodiment. FIG. 10 (b) schematically illustrates a well-known tail lamp unit. FIG. 10 (c) illustrates a virtual exemplary tail lamp unit obtained by enlarging the well-known tail lamp unit in the longitudinal direction without changing the transverse dimension thereof. In the tail lamp unit 2 of the present exemplary embodiment, the first and second partition sections 41 and 42 are individual components separately produced from the reflection member 21. Even when the longitudinal dimension of the tail lamp unit 2 is herein increased from L1 to L1', the longitudinal dimensions of the first and second partition sections 41 and 42 are only required to be increased without increasing the longitudinal dimension of the reflection member 21. Therefore, it is possible to inhibit increase in the transverse dimensions of the lateral surfaces of the reflection sections 31 and 32 (see W1 and W2) even when the lateral surfaces of each of the first, second and third reflection sections 31, 32 and 33 are slanted for backwardly increasing the interval therebetween. Further, the interval between the first and second partition sections 41 and 42 is reduced to the rearward. Therefore, the transverse interval between the first and second partition sections 41 and 42 (see W3) is not increased even when the longitudinal dimension of the tail lamp unit 2 is increased. Therefore, it is possible to inhibit the tail lamp unit 2 from being enlarged in the transverse direction. Further, the partition member 22 and the reflection member 21 are separate individual components. Therefore, the both members can be easily manufactured by resin molding using a mold. As described above, it is possible to simultaneously achieve easiness of manufacturing, enlargement of the tail lamp unit 2 in the longitudinal direction, and inhibition of enlargement of the tail lamp unit 2 in the transverse direction.

Further, a slanted angle θ1 of the lateral surface of the first reflection section 31 and a slanted angle θ2 of the lateral surface of the second reflection section 32 in the tail lamp unit 2 of the present exemplary embodiment (see FIG. 10 (a)) are respectively greater than a slanted angle θ1' of the lateral surface of a section corresponding to the first reflection section 31 and a slanted angle θ2' of the lateral surface of a section corresponding to the second reflection section 32 in the virtual exemplary tail lamp unit obtained by enlarging the well-known tail lamp unit (see FIG. 10 (c)). Therefore, the tail lamp unit 2 according to the present exemplary embodiment can reflect the light emitted from the right and left flusher bulbs 26 and 27 towards a wide range of area without increasing the transverse dimension of the tail lamp unit 2.

The front end of the first partition section 41 is disposed in the first groove section 34. The structure can inhibit light leakage from the first container space S1 to the third container space S3 and vice versa. Further, the front end of the second partition section 42 is disposed in the second groove section 35. Therefore, the structure can inhibit light leakage from the second container space S2 to the third container space S3 and vice versa.

The right flasher bulb 26, the left flasher bulb 27 and the tail lamp bulb 25 are covered with the outer lens member 23 produced as a single component. Therefore, it is herein possible to further enhance a waterproof property and an assemblage property compared to the structure that separate individual outer lens members 23 are attached to the right flasher bulb 26, the left flasher bulb 27 and the tail lamp bulb 25 on a one-to-one basis.

The rear opening of the partition member 22 is covered with the inner lens member 24. Further, the inner lens member 24 is a colored member with transparency. It is thereby possible to inhibit leakage of the white light emitted from the tail lamp bulb 25 to either the first container space S1 or the second container space S2 through a clearance between the outer lens member 23 and the partition member 22 even when the partition member 22 is contained in the outer lens member 23.

The grill section 46 is disposed within the rear opening of the partition member 22. The light emitted from the tail lamp bulb 25 can be thereby distinctive.

The tail lamp bulb 25, the right flasher bulb 26 and the left flasher bulb 27 are transversely aligned in a row. The first and second partition sections 41 and 42 can thereby further effectively inhibit leakage of the light emitted from each of the bulbs 25 to 27 from the container space of each bulb to the adjacent container space/spaces. Further, the tail lamp unit 2 can be herein further compactly produced than the structure that the tail lamp bulb 25, the right flasher bulb 26 and the left flasher bulb 27 are displaced in either the vertical direction or the longitudinal direction.

The tail lamp unit 2 is attached to the vehicle body 1 through the elastic members 43, 58 and 62 and the like. Therefore, it is possible to enhance the vibration isolation property of the tail lamp unit 2. Further, it is possible to enhance accuracy in alignment between the vehicle body cover 10 and the tail lamp unit 2.

The exemplary embodiment of the present invention has been described above. However, the present invention may not be limited to the aforementioned exemplary embodiment and a variety of changes can be made for the present invention without departing from the scope of the present invention. For example, the motorcycle to which the present invention is applicable may not be necessarily the mopeds and may include the scooters or the sport type motorcycle.

The first and second partition sections 41 and 42 may be separate individual members without being integrally included in the partition member 22. The grill section 46 may have any suitable shape including a plurality of through holes without having a lattice-like shape. The outer lens member 23 may not be necessarily a colored member with transparency. For example, the outer lens member 23 may be a colorless transparent member.

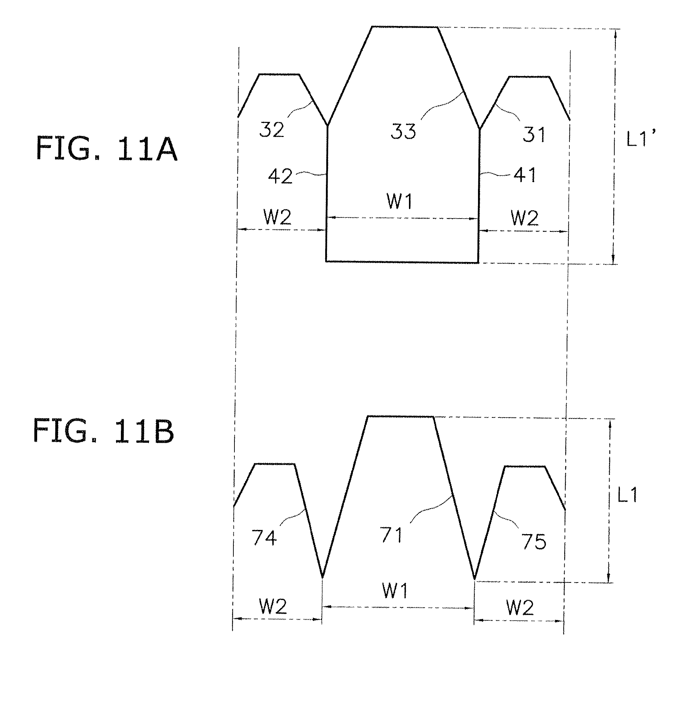

As illustrated in FIG. 11 (a), the first and second partition sections 41 and 42 may be disposed in parallel to each other. In this case, the transverse interval between the first and second partition sections 41 and 42 (see W1) is not increased even when the longitudinal dimension of the tail lamp unit 2 is increased from L1 to L1'. Therefore, it is possible to inhibit enlargement of the tail lamp unit 2 in the transverse direction. It should be noted that FIG. 11 (b) is a schematic diagram of a well-known tail lamp unit.

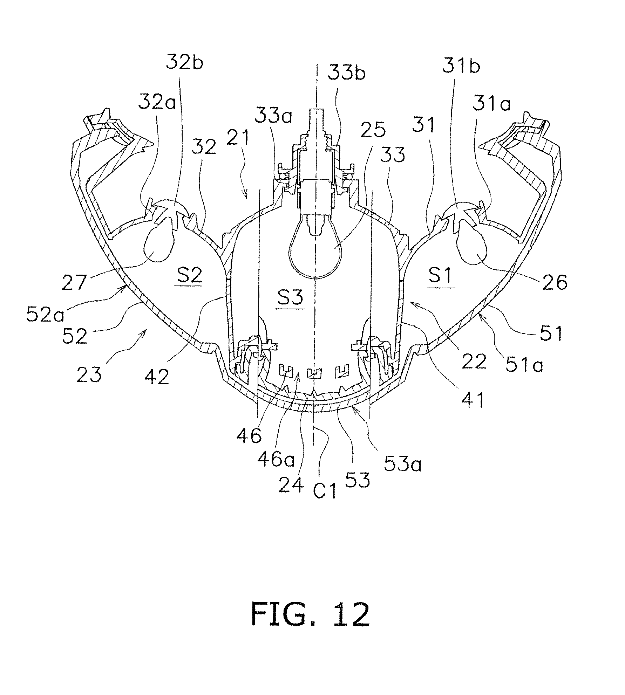

The first and second partition sections 41 and 42 may not be necessarily disposed for spatially separating the bulbs 25, 26 and 27 as long as they can separate the container spaces S1, S2 and S3 of the bulbs 25, 26 and 27 from each other. For example, the front ends of the first and second partition sections 41 and 42 may be positioned rearwards of the bulbs 25, 26 and 27 as illustrated in FIG. 12.

In the aforementioned exemplary embodiment, the partition member 22 is made of an opaque resin. However, the partition member 22 may have mirror surfaces and may be disposed for reflecting light.

The tail lamp bulb 25, the right flasher bulb 26 and the left flasher bulb 27 may be displaced in either the longitudinal direction or the vertical direction without being transversely aligned in a row.

### <Industrial Applicability>

According to the present invention, it is possible to achieve the following advantageous effects for a tail lamp unit: easiness of manufacturing; enlargement of the tail lamp unit in the longitudinal direction; and inhibition in enlargement of the tail lamp unit in the transverse direction.

### REFERENCE SIGNS LIST

- 25: Tail lamp bulb
- 26: Right flasher bulb
- 27: Left flasher bulb
- 31: First reflection section
- 32: Second reflection section
- 33: Third reflection section
- 21: Reflection member
- 41: First partition section
- 42: Second partition section
- 2: Tail lamp unit for motorcycle
- 34: First groove section
- 35: Second groove section
- 23: Outer lens member
- 22: Partition member
- 24: Inner lens member
- 46: Grill section
- 1: Vehicle body
- 100: Motorcycle
- 43, 58, 62: Elastic member

## Claims

1. A tail lamp unit (2) for a motorcycle, comprising:
a tail lamp bulb (25);
a right flasher bulb (26) disposed rightward of the tail lamp bulb (25);
a left flasher bulb (27) disposed leftward of the tail lamp bulb (25);
a reflection member (21) including: a first reflection section (31) configured to backwardly reflect a light emitted from the right flasher bulb (26); a second reflection section (32) configured to backwardly reflect a light emitted from the left flasher bulb (27); and a third reflection section (33) configured to backwardly reflect a light emitted from the tail lamp bulb (25);
a partition member (22) made of an opaque resin and including a first partition section (41); a second partition section (42); and a hollow space positioned between the first partition section (41) and the second partition section (42), the hollow space longitudinally penetrating the partition member (22);
the first partition section (41) disposed rearwards of the reflection member (21) in a front-rear direction of the tail lamp unit (2) in its mounted position on a motorcycle, the first partition section (41) separating a first container space and a third container space, the first container space for disposing the right flasher bulb (26) therein, the third container space for disposing the tail lamp bulb (25) therein; and
the second partition section (42) disposed rearwards of the reflection member (21) in a front-rear direction of the tail lamp unit (2) in its mounted position on a motorcycle, the second partition section (42) separating the third container space and a second container space, the second container space for disposing the left flasher bulb therein (27),
**characterized in that**
the partition member (22) is produced as an individual component separated from the reflection member (21), and
the first partition section (41) and the second partition section (42) are disposed either in parallel to each other or at an interval gradually backwardly reduced in a front-rear direction of the tail lamp unit (2) in its mounted position on a motorcycle.

2. The tail lamp unit (2) for a motorcycle according to claim 1,
wherein the reflection member (21) includes: a first groove section (34) disposed between the first reflection section (31) and the third reflection section (33); and a second groove section (35) disposed between the second reflection section (32) and the third reflection section (33),
a front end of the first partition section (41) is disposed in the first groove section (34); and
a front end of the second partition section (42) is disposed in the second groove section (35).

3. The tail lamp unit (2) for a motorcycle according to claim 1 or 2, further comprising:
an outer lens member (23) produced as a single integrally formed component, the outer lens member (23) disposed for covering the right flasher bulb (26), the left flasher bulb (27) and the tail lamp bulb (25) from back sides thereof, the outer lens member (23) covering the first partition section (41) and the second partition section (42).

4. The tail lamp unit (2) for a motorcycle according to claim 3, further comprising:
an inner lens member (24) covering a rear opening of the partition member (22) communicating with the hollow space, the inner lens member (24) having a color different from a color of the outer lens member (23).

5. The tail lamp unit (2) for a motorcycle according to claim 4,
wherein the partition member (22) further includes a grill section (46) opposed to the inner lens member (24), and
the grill section (46) includes a plurality of through holes.

6. The tail lamp unit (2) for a motorcycle according to any of claims 1 to 5, wherein the right flasher bulb (26), the left flasher bulb (27) and the tail lamp bulb (25) are transversely aligned.

7. A motorcycle (100), comprising:
the tail lamp unit (2) for a motorcycle according to any of the previous claims; and
a vehicle body (1) for attaching the tail lamp unit (2) for a motorcycle thereto.

8. The motorcycle (100) according to claim 7, wherein the tail lamp unit (2) for a motorcycle is attached to the vehicle body (1) through an elastic member (43, 58, 62).

## Patentansprüche

1. Rücklichteinheit (2) für ein Motorrad, mit:
einem Rücklichtkolben (25);
einem rechten Blinkerkolben (26), der rechts von dem Rücklichtkolben (25) angeordnet ist;
einem linken Blinkerkolben (27), der links von dem Rücklichtkolben (25) angeordnet ist;
einem Reflektorelement (21), das aufweist: einen ersten Reflektorabschnitt (31), der ausgebildet ist, Licht, das von dem rechten Blinkerkolben (26) ausgesandt wird, nach hinten zu reflektieren; einen zweiten Reflektorabschnitt (32), der ausgebildet ist, Licht, das von dem linken Blinkerkolben (27) ausgesandt wird, nach hinten zu reflektieren; und einen dritten Reflektorabschnitt (33), der ausgebildet ist, Licht, das von dem Rücklichtkolben (25) ausgesandt wird, nach hinten zu reflektieren;
einem Teilungselement (22), das aus undurchsichtigem Harz hergestellt ist und einen ersten Teilungsabschnitt (41); einen zweiten Teilungsabschnitt (42); und einen Hohlraum, der zwischen dem ersten Teilungsabschnitt (41) und dem zweiten Teilungsabschnitt (42) angeordnet ist, aufweist, wobei der Hohlraum in Längsrichtung in das Teilungselement (42) eintritt;
wobei der erste Teilungsabschnitt (41) hinter dem Reflektorelement (21) in einer Vorwärts-Rückwärts-Richtung der Rücklichteinheit (2) in ihrer auf einem Motorrad montierten Position angeordnet ist, wobei der erste Teilungsabschnitt (41) einen ersten Aufnahmeraumbereich und einen dritten Aufnahmeraumbereich trennt,
wobei der erste Aufnahmeraumbereich zur Anordnung darin des rechten Blinkerkolbens (26) dient, und wobei der dritte Aufnahmeraumbereich zur Anordnung darin des Rücklichtkolbens (25) dient; und
wobei der zweite Teilungsabschnitt (42) hinter dem Reflektorelement (21) in einer Vorwärts-Rückwärts-Richtung der Rücklichteinheit (2) in ihrer auf einem Motorrad montierten Position angeordnet ist, wobei der zweite Teilungsabschnitt (42) den dritten Aufnahmeraumbereich und einen zweiten Aufnahmeraumbereich trennt, wobei der zweite Aufnahmeraumbereich zur Anordnung darin des linken Blinkerkolbens (27) dient,
**dadurch gekennzeichnet, dass**
das Teilungselement (22) als eine einzelne Komponente separat zu dem Reflektorelement (21) hergestellt ist, und
der erste Teilungsabschnitt (41) und der zweite Teilungsabschnitt (42) entweder parallel zueinander oder mit einem Abstand angeordnet sind, der sich nach hinten in einer Vorwärts-Rückwärts-Richtung der Rücklichteinheit (2) in ihrer auf einem Motorrad montierten Position graduell verringert.

2. Rücklichteinheit (2) für ein Motorrad nach Anspruch 1,
wobei das Reflektorelement (21) aufweist: einen ersten Nutenabschnitt (34), der zwischen dem ersten Reflektorabschnitt (31) und dem dritten Reflektorabschnitt (33) angeordnet ist; und einen zweiten Nutenabschnitt (35), der zwischen dem zweiten Reflektorabschnitt (32) und dem dritten Reflektorabschnitt (33) angeordnet ist,
wobei ein vorderes Ende des ersten Teilungsabschnitts (41) in dem ersten Nutenabschnitt (34) angeordnet ist; und
ein vorderes Ende des zweiten Teilungsabschnitts (42) in dem zweiten Nutenabschnitt (35) angeordnet ist.

3. Rücklichteinheit (2) für ein Motorrad nach Anspruch 1 oder 2, die ferner umfasst:
ein äußeres Linsenelement (23), das aus einer einzigen integral ausgebildeten Komponente hergestellt ist, wobei das äußere Linsenelement (23) zum Abdecken des rechten Blinkerkolbens (26), des linken Blinkerkolbens (27) und des Rücklichtkolbens (25) von ihren Rückseiten angeordnet ist, wobei das äußere Linsenelement (23) den ersten Teilungsabschnitt (41) und den zweiten Teilungsabschnitt (42) abdeckt.

4. Rücklichteinheit (2) für ein Motorrad nach Anspruch 3, die ferner umfasst:
ein inneres Linsenelement (24), das eine Rückseitenöffnung des Teilungselements (22), die mit dem Hohlraum in Verbindung steht, abdeckt, wobei das innere Linsenelement (24) eine Farbe aufweist, die sich von einer Farbe des äußeren Linsenelements (23) unterscheidet.

5. Rücklichteinheit (2) für ein Motorrad nach Anspruch 4,
wobei das Teilungselement (22) ferner einen Gitterabschnitt (46) aufweist, der dem inneren Linsenelement (24) gegenüberliegt, und
wobei der Gitterabschnitt (46) mehrere Durchgangslöcher aufweist.

6. Rücklichteinheit (2) für ein Motorrad nach einem der Ansprüche 1 bis 5, wobei der rechte Blinkerkolben (26), der linke Blinkerkolben (27) und der Rücklichtkolben (25) in Querrichtung ausgerichtet sind.

7. Motorrad (100) mit:
der Rücklichteinheit (2) für ein Motorrad nach einem der vorhergehenden Ansprüche; und
einem Fahrzeugkörper (1) zur Befestigung daran der Rücklichteinheit (2) für ein Motorrad.

8. Motorrad (100) nach Anspruch 7, wobei die Rücklichteinheit (2) für ein Motorrad mittels eines elastischen Elements (43, 58, 62) an dem Fahrzeugkörper (1) befestigt ist.

## Revendications

1. Unité de feu arrière (2) pour un motocycle, comprenant :
une ampoule de feu arrière (25) ;
une ampoule de clignotant droit (26) agencée à droite de l'ampoule de feu arrière (25) ;
une ampoule de clignotant gauche (27) agencée à gauche de l'ampoule de feu arrière (25) ;
un élément réflectif (21) comprenant : une première section de réflexion (31) configurée pour réfléchir vers l'arrière une lumière émise par l'ampoule de clignotant droit (26) ; une deuxième section de réflexion (32) configurée pour réfléchir vers l'arrière une lumière émise par l'ampoule de clignotant gauche (27) ; et une troisième section de réflexion (33) configurée pour réfléchir vers l'arrière une lumière émise par l'ampoule de feu arrière (25) ;
un élément de partition (22) constitué d'une résine opaque et comprenant : une première section de partition (41) ; une deuxième section de partition (42) ; et un espace creux positionné entre la première section de partition (41) et la deuxième section de partition (42), l'espace creux pénétrant longitudinalement l'élément de partition (22) ;
la première section de partition (41) agencée à l'arrière de l'élément réflectif (21) en direction avant-arrière de l'unité de feu arrière (2) dans sa position montée sur un motocycle, la première section de partition (41) séparant un premier espace conteneur et un troisième espace conteneur, le premier espace conteneur servant à y agencer l'ampoule de clignotant droit (26), le troisième espace conteneur servant à y agencer l'ampoule de feu arrière (25) ; et
la deuxième section de partition (42) agencée à l'arrière de l'élément réflectif (21) en direction avant-arrière de l'unité de feu arrière (2) dans sa position montée sur un motocycle, la deuxième section de partition (42) séparant le troisième espace conteneur et un deuxième espace conteneur, le deuxième espace conteneur servant à y agencer l'ampoule de clignotant gauche (27),
**caractérisée en ce que**
l'élément de partition (22) est produit comme un composant individuel séparé de l'élément réflectif (21), et
la première section de partition (41) et la deuxième section de partition (42) sont agencées soit parallèlement l'une à l'autre, soit espacées d'un intervalle qui se réduit graduellement vers l'arrière en direction avant-arrière de l'unité de feu arrière (2) dans sa position montée sur un motocycle.

2. Unité de feu arrière (2) pour un motocycle selon la revendication 1, dans laquelle
l'élément réflectif (21) comprend : une première section de rainure (34) agencée entre la première section de réflexion (31) et la troisième section de réflexion (33) ; et une deuxième section de rainure (35) agencée entre la deuxième section de réflexion (32) et la troisième section de réflexion (33),
une extrémité avant de la première section de partition (41) est agencée dans la première section de rainure (34) ; et
une extrémité avant de la deuxième section de partition (42) est agencée dans la deuxième section de rainure (35).

3. Unité de feu arrière (2) pour un motocycle selon la revendication 1 ou 2, comprenant en outre :
un élément de lentille externe (23) produit sous forme d'un composant intégré unique, l'élément de lentille externe (23) étant agencé pour recouvrir l'ampoule de clignotant droit (26), l'ampoule de clignotant gauche (27) et l'ampoule de feu arrière (25) depuis leur côté arrière, l'élément de lentille externe (23) recouvrant la première section de partition (41) et la deuxième section de partition (42).

4. Unité de feu arrière (2) pour un motocycle selon la revendication 3, comprenant en outre :
un élément de lentille interne (24) qui recouvre une ouverture arrière de l'élément de partition (22) communiquant avec l'espace creux, l'élément de lentille interne (24) ayant une couleur différente de celle de l'élément de lentille externe (23).

5. Unité de feu arrière (2) pour un motocycle selon la revendication 4,
dans laquelle l'élément de partition (22) comprend en outre une section de grille (46) opposée à l'élément de lentille interne (24), et
la section de grille (46) comprend une pluralité de trous traversants.

6. Unité de feu arrière (2) pour un motocycle selon l'une quelconque des revendications 1 à 5, dans laquelle l'ampoule de clignotant droit (26), l'ampoule de clignotant gauche (27) et l'ampoule de feu arrière (25) sont alignées transversalement.

7. Motocycle (100) comprenant :
l'unité de feu arrière (2) pour un motocycle selon l'une quelconque des revendications précédentes ; et
un corps du véhicule (1) pour y attacher l'unité de feu arrière (2) pour un motocycle.

8. Motocycle (100) selon la revendication 7, dans lequel l'unité de feu arrière (2) pour un motocycle est attachée au corps du véhicule (1) via un élément élastique (43, 58, 62).
